# EUROPEAN PATENT APPLICATION

(11) **EP 0 758 729 A1**
(43) Date of publication of application: **19.02.1997**
(21) Application number: 96830109.3
(22) Date of filing: 12.03.1996
(51) Int. Cl.: F16N 7/38, B60R 17/00

(54) **Device for the automatic lubrication of spider joints or the like, in particular in the transmission of heavy motor vehicles**

(30) Priority: 11.08.1995 IT FI950178
(71) Applicant: Ciaponi, Paolo, 56028 San Miniato Basso, Pisa (IT)
(72) Inventor: Ciaponi, Paolo, 56028 San Miniato Basso, Pisa (IT)
(74) Representative: Mannucci, Gianfranco, Dott.-Ing.

(57) **Abstract**

The device comprises in combination: a rotating manifold member (15) having a plurality of inlet valves (17) distributed in a circumferential alignment and all flowing into an annular manifold (21); at least one pipe (25) extending from the annular manifold (21) to the members to be lubricated; a distribution member (13) capable of advancing - when instructed - to draw near to said rotating manifold member in the region of said circumferential alignment and to rest by means of a seal (27) on the manifold member for the distribution of lubricant; and a plurality of positioning elements (39) positionally correlated to said inlet valves (17), each of which is capable of interacting with a proximity sensor (37) to bring about the distribution of lubricant.

## Description

Heavy means of road transport are currently equipped with transmissions which comprise spider or universal joints in which said spider is articulated by means of bearings which require periodic greasing. To this end, it is necessary to carry out programmed maintenance according to the time of effective use of the vehicle and/or the distance travelled, which maintenance has to be carried out underneath the stationary vehicle in uncomfortable conditions.

According to the invention, to avoid this drawback, a device is provided for the automatic lubrication of such spider joints.

In motor vehicles, in particular of the heavy type, the transmission of motion from the engine to an axle at a distance generally comprises a transmission shaft with an axis of rotation which is fixed in relation to the structure of the vehicle, a universal joint and a shaft with an axis which is mobile about the centre of said joint. The device according to the invention comprises in combination: a manifold member rotating integrally with the shaft with a fixed axis, said member having a plurality of inlet valves distributed in a circumferential alignment and all flowing into an annular manifold; at least one pipe which extends from the annular manifold to the members to be lubricated; a lubricant distribution device capable of advancing - when instructed - by means of a jack actuator integral with the structure of the vehicle to draw near to said rotating manifold member in the region of said circumferential alignment, to rest one of its own faces which is equipped with a distribution hole - with interposition of a seal - on the rotating manifold member for the distribution of lubricant; a plurality of positioning elements positionally correlated to said inlet valves, each of which is capable of interacting with a proximity sensor located on said structure, capable of bringing about the distribution of lubricant.

In a preferred embodiment, said manifold member is a ring which is coaxial with said fixed axis, said ring being axially limited, by a first plane face on which said circumferential alignment of the inlet holes of said valves is formed, and by a second face having an outlet hole which puts said annular manifold in communication with said pipe for feeding the lubricant to the members to be lubricated. In the case of lubrication of a spider joint, said pipe can have its own outlet end fixed in the region of a hole made close to the centre of the spider to lubricate the bearings thereof through holes inside the spider itself.

The injection equipment preferably comprises a single-action or double-action cylinder/pneumatic piston unit, on the rod of which there is fixed - in an axially adjustable position - a member for distribution of lubricant from a pressure pipe, said unit being capable of bearing and holding in position during the injection of lubricant a plane surface of said distribution member against said first plane face of said manifold member. Expediently, a circular groove is formed on said plane surface, into which a seal (made of rubber or other similar material) is inserted, which is capable of being interposed between said surface and said plane face.

Said positioning elements can be projections in the form of pegs, fins or the like, which are capable of interacting with the sensor fixed to the structure on which the shaft with the fixed axis rotates.

In a preferred embodiment of the invention, the device comprises a timed control circuit for bringing about the actuation of said cylinder/piston unit to draw the lubricant distributor near to said manifold member and for a timed distribution of lubricant. When the sensor is activated by the presence of one of said positioning elements having been drawn sufficiently near to the sensor itself, and this presence lasts - because the vehicle is stationary - beyond a first predetermined time interval from the moment of acutation of the sensor, for example 1 second, the control circuit makes provision to make said distributor draw near to the manifold and to pressurize for a second predetermined time interval (for example for 5 seconds) the lubricant distribution duct. When this second predetermined time interval has passed, the control circuit makes provision to make the distribution of lubricant stop and to make the distributor draw back by distancing it from the manifold. The control circuit also makes provision to interrupt the distribution and also to draw back the distribution member as soon as the sensor undergoes a change in state - such as when the vehicle is restarted - before the end of said second time interval, thus avoiding the sliding of the seal on the manifold and the consequent wear of the interposed seal.

Advantageously, some of said positioning elements can be removed to reduce statistically the frequency of lubrications according to the type of use of the vehicle.

The invention will be better understood by following the description and the attached drawing which shows a practical non-limiting embodiment of the invention itself. In the drawing,
Fig. 1 shows a partial plan view of a chassis for heavy transport equipped with a device according to the invention,
Fig. 2 shows an enlarged view of a detail in Fig. 1 partially sectioned along an axial plane, and
Fig. 3 shows an exploded perspective view of the manifold of the device in Fig. 1.

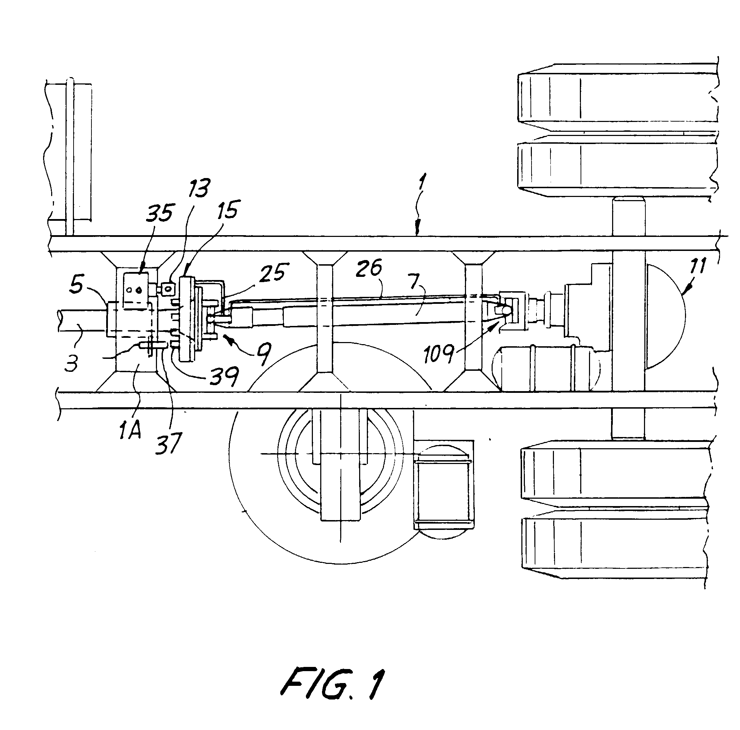

A chassis for heavy transport 1 (Fig. 1) comprises a transmission member 3 with a fixed axis which originates from the reduction and gear unit of the motor vehicle and rotates, and a differential case, on which there is mounted a rotating member with an axis which is fixed in relation to said case. There is always in any case a member rotating about an axis (X-X) which is fixed to the structure on which this axis is mounted. The member with a fixed axis, such as the shaft 3, transmits the rotation motion to a shaft 7 or receives the rotation motion by means of a universal joint 9 to make it possible for the shaft 7 to follow for example the oscillations of a suspended axle 11 while transmitting the rotation movement to the axle itself.

For the automatic lubrication of the joint 9, a device is provided according to the invention which comprises a distributor 13 for grease originating from a pipe 13A connected to a central unit (not shown) - the central unit being capable of supplying on request grease under pressure - and a manifold member 15.

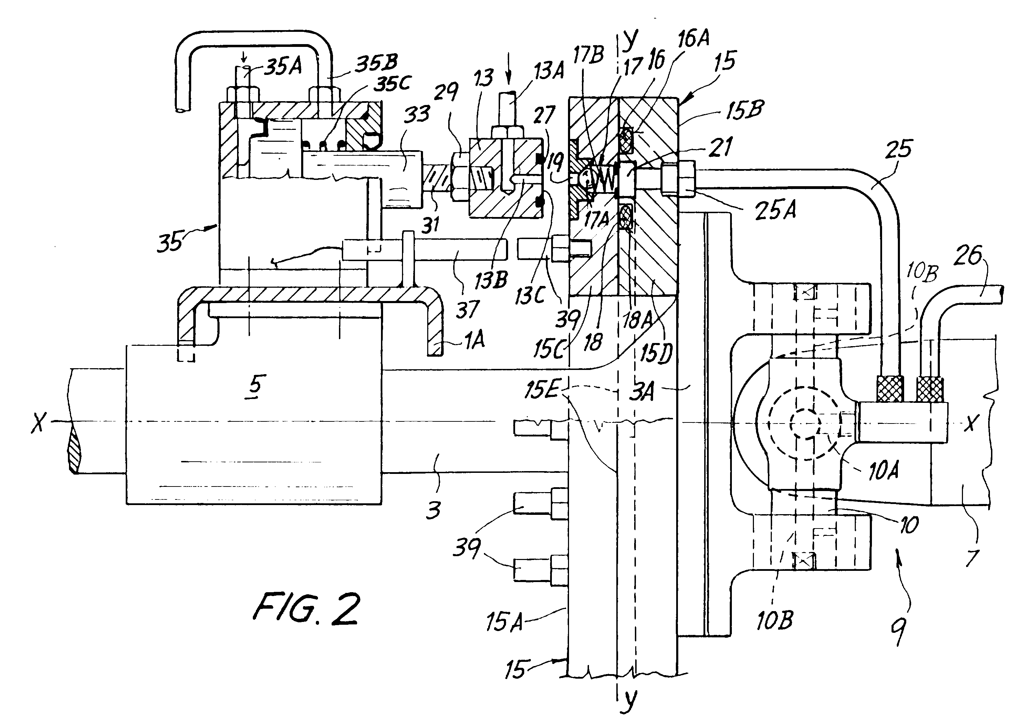

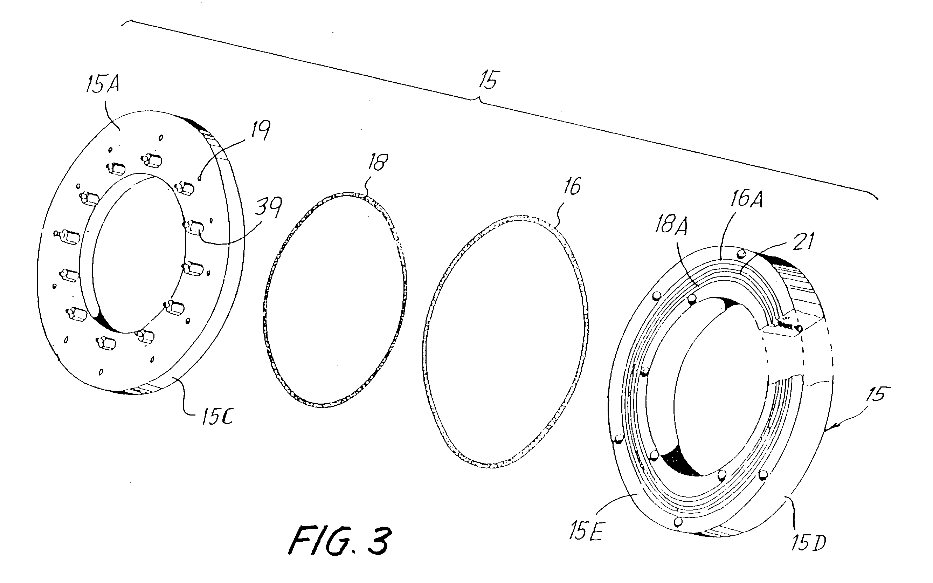

Said manifold member 15 (Figs 2 and 3) is of annular shape, coaxial with the shaft 3 and limited by a plane face 15A orthogonal to the axis of the shaft 3 and by an opposite face 15B; said member 15 is fixed by means of screws to the end flange 3A of the shaft 3 and is expediently formed by two rings 15C, 15D clamped to one another in the region of a plane with a path Y-Y parallel to the face 15A; it is possible to arrange seats for said fixing screws so as to allow the application to a number of types of transmissions. The manifold member 15 comprises a multiplicity of inlet valves 17 distributed circumferentially about the axis of the manifold member itself. Said valves each communicate with an inlet hole 19 made on said first face 15A of the manifold; on the outlet side, the valves all communicate with a circular channel 21 made on the ring 15D, coaxially with the shaft 3, on the face 15E for coupling with the ring 15C; two seals 16, 18 are arranged in corresponding channels 16A, 18A made on opposite sides of the channel 21 on the same coupling face 15E. Each valve comprises in a known manner a seat for a ball 17A stressed by a spring 17B against this seat to close the inlet hole 19. On the second face 15B of the manifold 15, a threaded hole 23 is made, to which it is possible to connect a terminal 25A of a duct 25 for supply of the grease to a central hole 10A of the spider 10 of the universal joint 9; this hole 10A communicates with other holes 10B which run axially through the arms of the spider to bring the lubrication grease to the bearings of the spider 10 itself. A conventional manual lubricator can also be kept on the spider 10.

From the same terminal of the duct 25 on the spider 10, a second duct 26 can be formed, which ends in a similar manner for example in the region of the centre of a spider of a second universal joint 109 located at the other end of the shaft 7 to lubricate the bearings thereof at the same time as those of the spider of the joint 9, or for other lubrication.

The grease distributor 13 is arranged close to the face 15A of the manifold member and has a plane face 13C parallel to and facing said face 15A of the manifold member. The face 13C of the distributor is passed through at the centre by a hole 13B for distribution of the grease, said hole being surrounded by an annular seal 27 arranged under pressure in a groove of the face itself.

The grease distributor is fixed - by means of threading and a safety lock nut 29 - to a pin 31 which is coaxial and integral with a rod 33 of a pneumatic jack actuator 33, 35. The jack is operated with single action by means of a compressed-air distribution duct 35A to translate said grease distributor 13 - following a lubrication instruction - orthogonally to the face 15A of the manifold so as to bring into contact, by means of the seal 27, the face 13C of the distributor and the face 15A of the manifold. A contrast spring 35C, coaxial with the piston 33 of the jack, moves the distributor away from the manifold following an interruption in compressed-air distribution to the duct 35A, to interrupt lubrication. Connected to a vent port of the jack is a short length of duct 35B ending in the open air with an opening facing downwards to avoid any dirt entering the jack itself.

The jack 35 is fixed to a crosspiece 1A of the chassis, to which crosspiece a proximity sensor 37 is also fixed, which is capable almost of touching the end of pins 39 integral with the face 15A of the manifold and projecting from this. The possibility is provided of mounting a pin 39 for each inlet hole 19 of a valve 17 of the manifold, said pins being aligned along a circumference concentric with the shaft 3.

When there is not sufficient space, it is possible to arrange the group 35, 13 in a radial position and the valves 17 are then arranged radially, with the holes 19 opening radially; the seal 27 in this case follows the external curvature of the manifold member 15.

The lubrication device also comprises a control circuit (not shown) connected to said sensor 37, and functions as follows.

When, for traffic or other reasons, the motor vehicle stops, after a first predetermined time interval (for example 1 sec), during which, following the stop, the sensor 37 has remained near to a pin 39, the control circuit, by means of the jack 35, makes the face 13C of the grease distributor draw near, for a second predetermined time interval (for example 5 sec), to the face 15A of the manifold, also opening within this time, with a slight delay, the inflow of compressed air to the central unit for distribution of the grease. In this manner, the grease is fed through the hole 19 and through the inlet valve 17 (corresponding to the peg 39 which is situated in front of the sensor 37) to the channel 23, from which it flows to the spider in the manner already described for lubrication of the associated bearings. The presence of the inlet valves 17 prevents the grease from being able to come out from other holes 19 which are not facing the distributor, dispersing without reaching the spider.

When the predetermined distribution time has ended, the control circuit interrupts the distribution of grease and makes the distributor 13 itself draw back, so that when the vehicle starts again there is no grazing of the seal 27 on the face 15A of the manifold; an interruption and a drawing back are also brought about when the vehicle is restarted before the expiry of the distribution time, for the same reason.

In this manner, the grease has been distributed to the spider of the joint, and this distribution takes place with a frequency according to the probability of a pin 39 facing the sensor 37, or in any case being in the field of action of this, when the vehicle stops. This probability is proportional to the number of pins 39 present and can be reduced by removing some of them, for example for vehicles intended for short journeys with frequent stops, such as for city traffic, for the purpose of avoiding excessive distribution of grease.

Suitable rigid and/or flexible protection means can be adopted for protection against penetration of mud or the like.

It is understood that the drawing shows only an example given only by way of practical demonstration of the invention, it being possible for this invention to vary in form and arrangement without nevertheless leaving the scope of the concept which underlies the invention itself. The presence if any of reference numbers in the enclosed claims has the purpose of facilitating reading of the claims with reference to the description and to the drawing, and does not limit the scope of protection represented by the claims. For example, the annular manifold 21 can be formed with T-shaped or other connections on the outside of the ring 15 which is then only the seat for the valves.

## Claims

1. Device for the lubrication of spider (10) joints (9) and the like of mechanical transmissions comprising a member with an axis (3) which is fixed in relation to a structure (1 or 11), a joint (9), and a shaft (7) with an axis which is mobile about the centre of the joint, characterized in that it comprises in combination: a manifold member (15) rotating integrally with the shaft with a fixed axis, with a plurality of inlet valves (17) distributed in a circumferential alignment and all flowing into an annular manifold (21); at least one pipe (25) from said annular manifold (21) towards the member(s) to be lubricated; on said structure, a distribution member (13) capable of advancing - when instructed - to draw near to said rotating manifold member (15) in the region of said circumferential alignment and to rest with a seal (27) on the rotating manifold member for the distribution of lubricant; a plurality of positioning elements (39) positionally correlated to said inlet valves (17), each of which is capable of interacting with a sensor (37) located on said structure (1), capable of bringing about the distribution of lubricant.

2. Device according to Claim 1, characterized in that said manifold member (15) is a ring which is coaxial with said fixed axis, said ring being axially limited by a first plane face (15A) and/or by a perimetral strip on which said circumferential alignment of the inlet valves (15) and of the associated inlet holes (19) is formed, and by a second face (15B) having an outlet hole (23) which puts said annular manifold (21) in communication with said pipe (25) for lubricating the members to be lubricated.

3. Device according to Claims 1 or 2, characterized in that said pipe (25) is fixed at its own outlet end in the region of a hole (10A) made close to the centre of a spider (10) of a universal joint (9) to lubricate the bearings thereof through holes inside the spider itself.

4. Device according to Claim 2 or 3, characterized in that said injection equipment (13) comprises a single-action or double-action cylinder/pneumatic piston unit (35), on the rod (33) of which there is fixed, in an axially adjustable position, a member (13) for distribution of lubricant from a pressure pipe (13A), said unit (35) being capable of bearing and holding in position during the injection of lubricant a surface (13C) of said distribution member against said manifold member, an annular seal (27) being provided.

5. Device according to Claim 4, characterized in that a circular groove is formed on said plane surface (13C), into which a seal (27) is inserted, which is capable of being interposed between said surface (13C) and said plane face (15A), about the inlet orifice (19) of a valve (17).

6. Device according to any one of the preceding claims, characterized in that said positioning elements (39) are projections in the form of pegs, fins or the like, in a number equal to or smaller than the number of said inlet valves (17) and arranged circumferentially on said manifold member (15) rotating coaxially with the fixed axis of said shaft (3), to touch and be detected by said sensor (37).

7. Device according to any one of the preceding claims, characterized in that it comprises a timed control circuit for the actuation of said cylinder/piston unit (35) to draw the lubricant distributor (13) near to said manifold member (15) and thus bring about a timed distribution of lubricant when a predetermined time has passed after the activation of said sensor (37) by a positioning element (39), thus signalling that the joint has stopped rotating, and to interrupt this distribution and to draw back the distribution member (13) as soon as the sensor (37) undergoes a change in state, thus signalling that the joint has started moving again.

8. Device according to Claim 7, characterized in that some of said positioning elements (39) can be removed to reduce statistically the frequency of lubrication.

9. Device for the automatic lubrication of spider joints or the like; the whole as described above and represented by way of exemplification in the attached drawing.
